# EUROPEAN PATENT SPECIFICATION

(11) **EP 1 980 055 B1**
(45) Date of publication and mention of the grant of the patent: **22.07.2009**
(21) Application number: 06764147.2
(22) Date of filing: 12.07.2006
(51) Int. Cl.: H04L 12/28

(54) **WIRELESS COMMUNICATION NETWORK SELECTION**
AUSWAHL DES DRAHTLOSEN KOMMUNIKATIONSNETZES
SÉLECTION DE RÉSEAU DE COMMUNICATIONS SANS FIL

(30) Priority: 30.01.2006 US 307254
(43) Date of publication of application: 15.10.2008
(73) Proprietor: SONY ERICSSON MOBILE COMMUNICATIONS AB, 221 88 Lund (SE)
(72) Inventor: NELSON, Joakim, S-222 70 Lund (SE)
(74) Representative: Aurell, Henrik
(86) International application number: PCT/EP2006/064151
(87) International publication number: WO 2007/085306

(56) References cited:
- EP-A- 1 241 838
- EP-A- 1 420 569
- WO-A-20/05067334
- US-A1- 2005 148 332

## Description

### Field of the invention

The present invention relates to operation of wireless communications devices in communications networks. In particular, the invention relates to selection and set up of a connection to one of a plurality of simultaneously detected communications networks. The invention provides a solution for assisting a user in the selection and setup process by storing and using information on preferred networks.

### Background

The desire to enable the public to connect to networks while being mobile in order to carry out tasks and duties, such as checking e-mails, browsing the Internet and downloading information is rapidly increasing, and today WLAN/WiFi networks are commonly used. Wi-Fi, or IEEE 802.11, is the standard for wireless LANs (Local Area Network), or WLANs. The abbreviation Wi-Fi stands for Wireless Fidelity, and resembles the Hi-Fi acronym. The infrastructure of the wireless networks is getting in place and grows larger day by day. Many cities provide WLAN-networks in certain areas in order to market the city, and hotspots, access points and the like are popping up everywhere, some free of charge others relate to a fee. The fee may be dynamic which enables real-time, value-based charging of advanced data network services such as content, mobile commerce and location-based services or it may be fixed based on time of usage.

In general it has become increasingly common that mobile users wanting to connect e.g. to the Internet using wireless communications device such as a mobile phone or a portable computer will scan and identify a plurality of WLAN networks within range of the device. Wireless local area networks are generally constructed to communicate data pursuant to an operating protocol, such as any of the IEEE 802.11 (a) , (b), (g), and (n) operating protocols. A commercial 2.4 GHz frequency band is allocated for WLAN communications, and an unregulated band in the 5 GHz frequency range is also usable by WLAN systems. The mobile nodes operable in the wireless local area networks are sometimes configured to monitor selected frequencies within the allocated frequency bands to detect for the presence of a WLAN within communication range of the mobile node. Access points or other network elements of the WLAN broadcast signals that are detectable by the mobile nodes, when the mobile nodes are within the coverage areas of the WLAN. The signals broadcasted by the WLAN and monitored by the mobile nodes typically include an SSID (Service Set Identifier) value that identifies the WLAN that broadcasts the signal. The SSID differentiates one WLAN from another, so all access points and all devices attempting to connect to a specific WLAN must use the same SSID. Because an SSID can be sniffed in plain text from a packet it does not supply any security to the network.

When a wireless communications device, forming a mobile node, is positioned at a location encompassed by more than one WLAN, the mobile node may be capable of operation to communicate with any of the more than one WLAN. A decision is made as to which of the WLANs that the mobile node shall attempt to communicate. There is generally a preference to communicate by way of a certain WLAN of the available WLANs.

A prior art solution for selecting a WLAN for connection is provided in W02005/109934. According to the solution proposed therein, the mobile node identifies the different networks based on the SSID. WLANs are stored in a single list that identifies WLANs in order of preference, where the preference order is position-dependent. The location of the mobile node may be provided to the mobile node in different ways, e.g. by GPS or through received country codes. A drawback with this solution is that the country code does not provide much of a tool when moving between different WLANs within a country. Furthermore, if more detailed position information is needed the mobile node needs to be capable of positioning, which entails a complex design of the wireless communications device.

WO 2005/067334 and US 2005/0148332 disclose systems for automatic selection of networks using a list of preference.

### Summary of the invention

The present invention seeks top provide a user-friendly and simple way of selecting and setting up of a communication link between a wireless communications device and a communications network. More particularly, the invention seeks to provide a solution for simplified selection of network for setup, in situations when there are plural accessible networks within range of the communications device.

In order to achieve these objects, the present invention involves the notion of storing selections made regarding a network for setup, in a situation when a number of networks are deemed to be accessible. The once selected network is stored as a preferred selection for a subsequent scenario in which the same combination of networks is again detected as being accessible. A connection link to the preferred network may then be automatically setup upon detection of the previously detected combination of networks, or actual setup of the connection may be activated upon a simple connection command from a user. The effect of the invention is that the user can take a decision once as to which network to connect to based on any ground, such as cost, bit rate, subscription or the like, and then retrieve this selection at a later occasion without having to go through the same process of selection. This effect may be particularly advantageous when the user of the wireless communications device more or less frequently visits one or a number of places covered by plural wireless networks.

One embodiment of the invention relates to a wireless communications device, comprising:
- a memory for storing identity information for combinations of wireless networks and, for at least one of the combinations, information of a preferred network of that combination;
- a signal transceiver unit configured to receive network communication signals including network identity information;
- a control unit, including a processor system and a client software, configured to
   compare identity information stored in the memory with received identity information for a number of simultaneously accessible networks,
   select the preferred network of a stored combination comprising the number of simultaneously accessible networks, and
   set up a connection to the selected network.

In one embodiment, the wireless communications device comprises a user interface operable to manually select one of a number of simultaneously detected networks, wherein the control unit is configured to store identity information for the number of simultaneously detected networks as a combination, and the selected network as the preferred network of that combination, in the memory.

In one embodiment, the control unit is configured to set up a connection to the selected network responsive to a connection setup command.

In one embodiment, the preferred network is the network last selected by a user for connection, among the networks comprised in that combination.

In one embodiment, at least one of the wireless networks is a WLAN.

In one embodiment, at least one of the wireless networks is a cellular network.

In one embodiment, the control unit is configured to select the preferred network of a stored combination consisting of the number of simultaneously accessible networks.

In one embodiment, the wireless communications device comprises a user interface including a display and a data input interface, wherein the control unit is configured to
detect signal reception from a number of networks forming a combination stored in the memory,
present a connect option on the display, wherein the user interface is configured to set up a connection to the preferred network responsive to user activation of the connect option.

In one embodiment, the wireless communications device forms part of a mobile phone.

In one embodiment, the wireless communications device forms part of a portable computer.

One embodiment of the invention relates to a computer program product for use in a processor system of a wireless communications device, comprising computer program code executable to:
detect network identity information in communication signals received from a number of simultaneously accessible networks,
access a memory storing identity information for combinations of wireless networks and, for at least one of the combinations, information of a preferred network of that combination,
compare identity information stored in the memory with the received identity information,
select the preferred network of a stored combination comprising the number of simultaneously accessible networks, and
set up a connection between the communications device and the selected network.

In one embodiment, the computer program comprises computer program code executable to:
store identity information for a number of simultaneously detected networks as a combination,
sense user selection of one of the detected networks for connection, and
store the selected network as the preferred network of that combination, in the memory.

In one embodiment, the computer program comprises computer program code executable to:
set up a connection to the selected network responsive to a connection setup command.

In one embodiment, the preferred network is the network last selected by a user for connection, among the networks comprised in that combination.

In one embodiment, at least one of the wireless networks is a WLAN.

In one embodiment, at least one of the wireless networks is a cellular network.

In one embodiment, the computer program comprises computer program code executable to:
select the preferred network of a stored combination consisting of the number of simultaneously accessible networks.

In one embodiment, the computer program comprises computer program code executable to:
detect signal reception from a number of networks forming a combination stored in the memory,
present a connect option on a display, and
set up a connection to the preferred network responsive to user activation of the connect option.

### Brief description of the drawings

The features and advantages of the present invention will be more apparent from the following description of the invention with references to the accompanying drawings, on which:
Fig. 1 schematically illustrates a wireless communications device in the form of a mobile phone, by means of which an embodiment of the present invention may be employer;
Fig. 2 illustrates the presence of wireless communications device according to an embodiment of the invention within the range of three different communication networks; and
Fig. 3 schematically illustrates functional block diagram of a wireless communications device according to an embodiment of the present invention.

### Detailed description of the invention

Embodiments of the present invention will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

The present invention is described below with reference to block diagrams and/or flowchart illustrations of methods, apparatus (systems) and/or computer program products according to embodiments of the invention. It is understood that several blocks of the block diagrams and/or flowchart illustrations, and combinations of blocks in the block diagrams and/or flowchart illustrations, can be implemented by computer program instructions. These computer program instructions may be provided to a processor of a general purpose computer, special purpose computer, and/or other programmable data processing apparatus to produce a machine, such that the instructions, which execute via the processor of the computer and/or other programmable data processing apparatus, create means for implementing the functions/acts specified in the block diagrams and/or flowchart block or blocks.

These computer program instructions may also be stored in a computer-readable memory that can direct a computer or other programmable data processing apparatus to function in a particular manner, such that the instructions stored in the computer-readable memory produce an article of manufacture including instructions which implement the function/act specified in the block diagrams and/or flowchart block or blocks.

The computer program instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions/acts specified in the block diagrams and/or flowchart block or blocks.

Accordingly, the present invention may be embodied in hardware and/or in software (including firmware, resident software, micro-code, etc.). Furthermore, the present invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate, propagate, or transport the program for use by or in connection with the instruction execution system, apparatus, or device.

The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a random access memory (RAM), a read-only memory (ROM), an erasable programmable read-only memory (EPROM or Flash memory), an optical fiber, and a portable compact disc read-only memory (CD-ROM). Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory.

The present invention is described herein as employed in and with a wireless communications device, also denoted a mobile device. In the context of the invention, the mobile device may e.g. be a mobile phone, a PDA (Personal Digital Assistant) or any other type of portable computer such as laptop computer. Furthermore, the invention is described as adapted for selection of one out of a plurality of simultaneously detected communications networks. In this context, a communications network may e.g. be an IEEE 802.11 type WLAN, a WiMAX, a HiperLAN, a Bluetooth LAN, or a cellular mobile communications network such as a GPRS network, or a third generation WCDMA network. Given the rapid development in communications, there will of course also be future type wireless communications networks with which the present invention may be embodied, but the actual design and function of the network is not of primary concern for the invention, which involves the actual process of selection of one out of a plurality of accessible networks.

For a mobile device only capable of communicating within cellular networks, the invention may be implemented as an embodiment for selecting one out of a plurality of cellular networks. If the mobile device is also capable of communicating in a WLAN, the invention may also be implemented as an embodiment for selecting one out of a plurality of WLANs. For a mobile device capable of communicating in a WLAN, but not in a cellular mobile communications network, e.g. a portable computer, the invention may also be implemented as an embodiment for selecting one out of a plurality of WLANs. For the sake of simplicity, though, the following description is focused on the application of the invention in a mobile phone, which is the hitherto best known mode of operation.

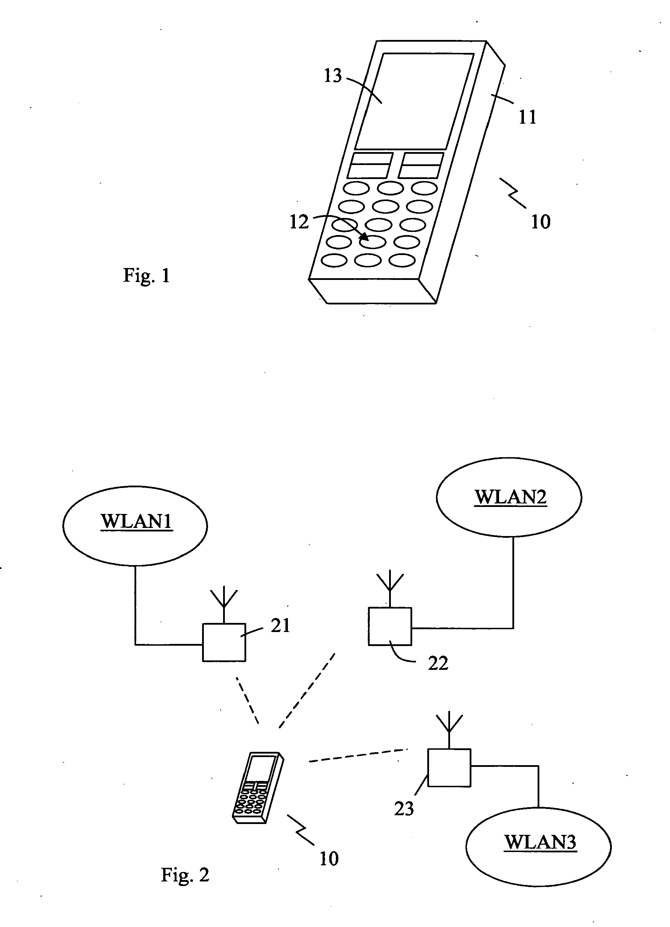

Fig. 1 illustrates a wireless communications device in the form of a mobile phone 10. Phone 10 comprises a housing 11 and a user interface including a keypad or keyboard 12 and a display 13. Typically, phone 10 also includes an audio interface including a microphone and a speaker, radio transceiver circuitry, an antenna, a battery, and a microprocessor system including associated software and data memory for radio communication, all contained within housing 11. The specific function and design of the terminal as such is of little importance to the invention, and will therefore not be described in any greater detail.

Referring to the Fig. 2, the present invention relates to establishing a connection from a wireless communications device, in this case mobile phone 10, to a communications network, in the illustrated case a WLAN. A user moves a mobile phone 10 into an area covered by a plurality of WLANs. The area as such may be any area, such as a restaurant or coffee shop, a market place, an airport or train station, and so on. The user wants to connect phone 10 to a communications network in order to perform a task or duty. In order to connect to a present network the user employs the mobile phone 10, which scans the area for available and accessible networks for wireless communication. In this context, wireless communication is generally achieved by means of radio ways, but the invention would as such work just as well for e.g. an infrared communication process. In the example according to Fig. 2 mobile phone 10 will find three different networks identified by their network names or identities, here referred to as WLAN1,WLAN2 and WLAN3. The network identities are preferably provided to mobile phone 10 by the SSID of the different networks, which is sent in the header of transmitted packets of the different WLANs. It should be understood that any other known way of identifying a network may be used in order to identify the network. In general, a mobile device connects through an access point or a base station in order to set up a connection to a communications network and it will be understood that the identity of the actual base station or access point may as well be used to identify the communications network, if there is a unique ID for the cell/network or access point. In Fig. 2, one access point is shown for each network: access point 21 for WLAN1, access point 22 for WLAN2, and access point 23 for WLAN3.

The identities of the different detected networks form a combination of identities WAN1, WLAN2, WLAN3 in the mobile device. This combination indicates a location of the phone 10 in a WLAN topology context. However, it need not represent a physical location, since there may well be many other different locations in which the same three WLANs are detected. According to the invention, one of the detected networks is automatically selected for setting up a connection, and the selection is based on a stored preference referred to the combination of detected networks. Therefore, a client software in the mobile phone 10 compares the combination of identities for WLAN1, WLAN2, WLAN3 with a list stored in a memory in phone 10, which list contains stored identities of previously scanned and detected communications networks. If a matching combination of networks is stored in the memory, and a preferred network for that combination is linked to that combination, that preferred network is selected by the client for setup of a communication link. The list may also include data and activities necessary for the mobile device to know/perform in order to set up the connection such as a password for a certain connection, selection of a link speed if there is a plurality of options and so on. Accordingly, the client provides all the information read from the memory in order to set up a satisfying connection

The existence of a preferred network for a combination of communications networks involves the notion of setting or defining which network is to be preferred. According to a preferred embodiment of the invention, a network once selected for communication setup among a number of simultaneously accessible networks, will thereafter be the preferred network. Setting it as the preferred network may be automatic, in that a tag for the selected network is included in the memory, or in that a link or pointer to the selected network is included in s list of network combinations. A semi-automatic solution may include presentation on display 13 of an option to store the selected network as preferred, after the communication session has expired. This allows the user to skip the preference selection, if e.g. the connection speed or the cost was not satisfactory.

Reference is again made to Fig. 2, where it is assumed that the user of mobile phone 1 visits the combined coverage area of WLAN1, WLAN2, and WLAN3 for the first time (or a subsequent time after not having made any selection or haven't stored a preferred selection previously). Therefore, there is no match to this combination of networks in the memory of phone 10. The identities of the detected access points and the combination of identities WLAN1, WLAN2, WLAN3 are stored in said memory of the mobile device as a combination. By storing all detected networks and combinations of networks in a memory the mobile device also stores the topology of the networks. During the life span of mobile phone the list of detected networks, the topology of networks, may be long and full of information. Being the first time the mobile device is in the coverage area in question, different communications networks are examined by the mobile device in order to set up a connection to one of the networks. The client preferably allows the user to preset a criterion for first time choice in case of plural simultaneously networks. Such a criterion may e.g. be highest bit rate, lowest fee, network stability, or selection of a particular service provider if one of the detected networks belongs to that service provider. Even if the client does not allow pre-configuration of a criterion for first time choice, the user may make a manual selection based on the same criterion, using user interface 12 and 13. In the present example the user wants to connect using the cheapest/free of charge network, and while WLAN2 is free of charge WLAN1 requires a subscription and WLAN3 uses a cost rate based on time of usage. Therefore, WLAN2 is selected for communication setup, either by a automatic first time selection algorithm defined by the client in the phone 10, or manually by means of the user interface. A connection is thereafter setup to establish a communications session between mobile phone 10 and WLAN2, in which session the user operates mobile phone 10 in order to perform desired task or duties. In one embodiment of the present invention the client automatically indicates the selected network, in the example above WLAN2, in the list as preferred when selection is made. In another embodiment the marking or indication of a network as preferred is based on what the user enters via the user interface. Lots of disruptions or other mishaps may occur that influence the usage of the network in a negative way and therefore the user may not consider the network/access point to be successfully used. Therefore, according to an embodiment of the present invention the user is asked, via for example a GUI, to respond if the network used was a satisfactory used network, and if the user responds that the connection was successful the identity of the network in question is marked as preferred. If, on the other hand, the user responds that the connection was unsuccessful, the network will not be stored as preferred. In such a case, the next time a communication session is to be set up when the present combination of networks is detected, the network selection will again proceed as a first time selection. However, it is here assumed that the combination of WLAN1, WLAN2, WLAN3 has been detected for the first time, and that the selected session with WLAN2 was indeed stored as preferred for that combination.

When the user of phone 10 revisits the area according to Fig.2, mobile phone 10 scans and detects and identifies the different access points 21, 22, and 23 or their networks. According to the example the networks identified as accessible are WLAN1, WLAN2, WLAN3, and this combination of identities is therefore checked against the list stored in the memory of mobile phone 10. In the list, the given combination of the identities WLAN1, WLAN2, WLAN3 is found, and linked to that combination, or otherwise uniquely indicated dependent on that combination of identities, the client retrieves the identity of WLAN2 as the preferred selection. In one embodiment, automatic connection is thereby set up to WLAN 2. In another embodiment, the user is first asked, e.g. by means of a query presented on display 13, if network connection is to be setup, where connection is established only after a connection setup command is given, preferably by means of input interface 12. In yet another embodiment, the user must first make a connection command, e.g. using a dedicated key or a soft key of input interface 12, activating an icon on display 13 by means of a navigation tool, or by browsing and activating a menu item in a menu system presentable on display 13. By giving a connection command, connection setup is automatically initiated with the preferred network, WLAN2. It is, therefore, not primarily the setting up of the connection that is automatic, it is the selection of which network to use. To be able to set up the connection to certain networks some necessary activities have to be performed. These activities may as well be stored in the memory of the device and retrieved in order to set up the connection. Such activities may be providing a password for a certain connection, selection of link speed and so on, which activities have to be performed in order to be able to set up the connection. In accordance with this embodiment, these activities are automatically performed once selection of network has been made.

It will be understood that in an embodiment the network preference used may be stored in the memory as a list of preferred networks, or access points, where each preference is related to stored combinations of identities of networks or access points. One embodiment may thereby implement the ability of changing preferences when visiting the area next time. The feature of relating the preference to a stored combination also enables the user to set a general preference for the mobile phone 10, or to change stored preferences if the user e.g. decides that a certain WLANx shall never be used. If the above relation is stored, i.e. that WLAN2 is the preferred selection from the combination of WLAN1, WLAN2, WLAN3, and it is detected that WLANx is stored as the preferred selection for the combination of WLAN1, WLAN2, WLANx, the user may cancel WLANx as preferred and instead define WLAN2 as preferred also for that combination. This change may also be client-assisted, preferably by means of a menu item selection in a connection control submenu.

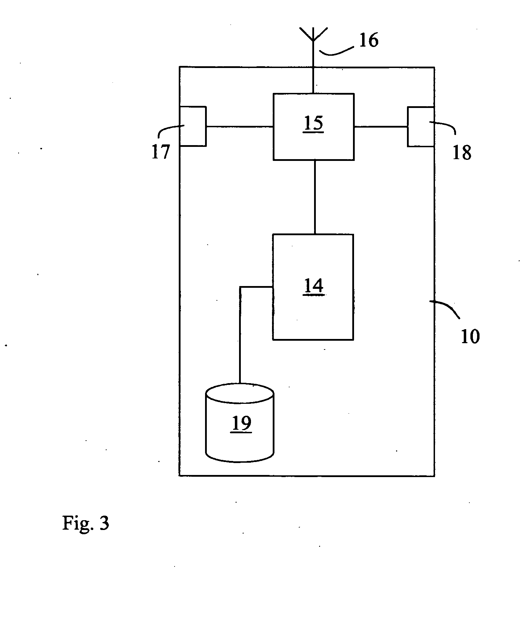

Referring to Fig.3, a wireless communications device according to an embodiment of invention is schematically illustrated by means of a block diagram. The blocks indicated represent basic functions needed to carry out the invention. However, the elements included and shown in Fig. 3 represent functional items rather than physically separate elements. As, is well known in the art of communication devices, many functions are carried out by data processing, such as analog to digital encoding and decoding and signal processing. The same reference numeral 10 is used for the wireless communications device and the mobile phone of Fig. 1, for the same of simplicity. However, it should again be understood that the wireless communications device may likewise take the shape of e.g. a PDA or a laptop computer. Device 10 includes a control unit 14, configured to handle data transaction within device 10 for carrying out the processes of the invention, such as retrieving and storing data in and from a memory 19. Control unit 14 includes a processor system, comprising a microprocessor with associated memory space and an operating system. Furthermore, a client software which is executable by the processing system, is included in control unit 14 by means of a computer program product including computer program code. Control unit 14 is communicatively connected to a signal transceiver unit 15. The signal transceiver unit is connected to at least one antenna 16 , preferably configured to transmit and receive data signals by means of radio waves. In one embodiment, device 10 includes both a radio antenna 16 and an auxiliary antenna 17, e.g. a Bluetooth antenna for short wave radio transmission or a dedicated WLAN antenna. An infrared emitter and receiver 18 may also be coupled to the signal transceiver unit 15. The signal transceiver unit 15 may comprise the function of a scanning and detecting unit, configured to scan and detect the presence of any accessible wireless network connection, of any kind which the device is capable of handling. In the process of scanning for communication networks, one or more network signals may be detected and identified, e.g. by reading a header in received data or by a handshaking procedure.

The information received in the transceiver unit is subsequently processed by control unit 14. If the received information contains identity information of two or more networks which are simultaneously accessible for connection, control unit 14 searches memory 19 for the presence of a stored combination of networks comprising the combination of those two detected networks. In one embodiment, only the existence of an exactly identical combination, i.e. a previously stored combination consisting of exactly the same networks as detected, will be acceptable as a match. In another embodiment, if there is no such exact match, any previously stored combination including all of the detected networks and also one or more other networks, will be acceptable as a match. In such an embodiment, the best correlation with the detected set of networks will be determined to be the match, i.e. the combination comprising the detected networks and the least number of further networks. For the matching combination found in the process of comparison, the pre-stored preferred network is thereby selected by the control unit when executing the client software. The wireless communications device 10 is then ready for setting up of a connection to the selected network. This is, as such, performed either automatically once the match is established, or after user activation using a user interface of the wireless communications device, according to the different examples already described.

The present invention generates a number of benefits when compared to the state of the art. The user only has to scan a certain place for network connections the first time the wireless communications device is brought to that place, and the user will automatically select and potentially connect to the network last used provided the network topology looks the same or partially matches. No network support is needed since the wireless communications device keeps a "map of WLAN topology", by storing combinations of WLANs previously passed. The client software can be installed in a mobile device requiring only a small amount of storage resources, and therefore does not severely occupy memory space which can be used for other purposes.

The foregoing has described the principles, preferred embodiments and modes of operation of the present invention. However, the invention should be regarded as illustrative rather than restrictive, and not as being limited to the particular embodiments discussed above. It should therefore be appreciated that variations may be mad in those embodiments by those skilled in the art without departing from the scope of the present invention as defined by the following claims.

## Claims

1. A wireless communications device (10), **characterized in**:
- a memory (19) for storing identity information for combinations of wireless networks and, for at least one of the combinations, information of a preferred network of that combination;
- a signal transceiver unit (15) configured to receive network communication signals including network identity information forming a received combination of simultaneously accessible wireless networks; and
- a control unit (14), including a processor system and a client software, configured to compare combinations of identity information stored in the memory (19) with the received combination of wireless networks, and to select the preferred network of a stored combination comprising the received combination of wireless networks, and to set up a connection to the selected network.

2. The wireless communications device of claim 1, comprising a user interface operable to manually select one of a number of simultaneously detected networks, wherein the control unit (14) is configured to store identity information for the number of simultaneously detected networks as a combination, and the selected network as the preferred network of that combination, in the memory (19).

3. The wireless communications device of claim 1, wherein the control unit (14) is configured to set up a connection to the selected network responsive to a connection setup command.

4. The wireless communications device of claim 1, wherein the preferred network is the network last selected by a user for connection, among the networks comprised in that combination.

5. The wireless communications device according to claim 1, wherein at least one of the wireless networks is a WLAN.

6. The wireless communications device according to claim 1, wherein at least one of the wireless networks is a WiMAX network

7. The wireless communications device according to claim 1, wherein at least one of the wireless networks is a cellular network.

8. The wireless communications device according to claim 1, wherein the wireless networks is any combination of wireless networks using different techniques such as WLAN, WiMAX, cellular and the like.

9. The wireless communications device according to claim 1, wherein the control unit (14) is configured to select the preferred network of a stored combination consisting of the number of simultaneously accessible networks.

10. The wireless communications device according to claim 1, comprising a user interface including a display and a data input interface, wherein the control unit is configured to
detect signal reception from a number of networks forming a combination stored in the memory,
present a connect option on the display, wherein the user interface is configured to set up a connection to the preferred network responsive to user activation of the connect option.

11. The wireless communications device according to claim 1, forming part of a mobile phone.

12. The wireless communications device according to claim 1, forming part of a portable computer.

13. Computer program product for use in a processor system of a wireless communications device (10), **characterized in** a computer program code executable to:
detect network identity information in communication signals received from a number of simultaneously accessible networks forming a received combination of wireless networks,
access a memory (19) storing identity information for combinations of wireless networks and, for at least one of the combinations, information of a preferred network of that combination,
compare combination identity information stored in the memory (19) with the received combination identity information,
select the preferred network of a stored combination comprising the received combination of simultaneously accessible networks, and
set up a connection between the communications device and the selected network.

14. The computer program of claim 13, comprising computer program code executable to:
store identity information for a number of simultaneously detected networks as a combination,
sense user selection of one of the detected networks for connection, and
store the selected network as the preferred network of that combination, in the memory.

15. The computer program of claim 13, comprising computer program code executable to:
set up a connection to the selected network responsive to a connection setup command.

16. The computer program of claim 13, wherein the preferred network is the network last selected by a user for connection, among the networks comprised in that combination.

17. The computer program of claim 13, wherein at least one of the wireless networks is a WLAN.

18. The computer program of claim 13, wherein at least one of the wireless networks is a WiMAX network

19. The computer program of claim 13, wherein at least one of the wireless networks is a cellular network.

20. The computer program of claim 13, wherein the wireless networks is any combination of wireless networks using different techniques such as WLAN, WiMAX, cellular and the like.

21. The computer program of claim 13, wherein the computer program code executable to:
select the preferred network of a stored combination consisting of the number of simultaneously accessible networks.

22. The computer program of claim 13, comprising computer program code executable to:
detect signal reception from a number of networks forming a combination stored in the memory,
present a connect option on a display, and
set up a connection to the preferred network responsive to user activation of the connect option.

## Patentansprüche

1. Ein drahtloses Kommunikationsgerät (10), **gekennzeichnet durch**:
- einen Speicher (19) zur Lagerung von Identitätsinformationen über Kombinationen von drahtlosen Netzwerken und, für mindestens eine der Kombinationen, Lagerung von Informationen über ein bevorzugtes Netzwerk für diese Kombination;
- eine Signalsende-/-empfangseinheit (15), konfiguriert, um Netzwerkkommunikationssignale zu empfangen, die Netzwerkidentitätsinformation beinhaltet, die eine empfangene Kombination von gleichzeitig zugriffbaren drahtlosen Netzwerken bildet, und
- eine Steuereinheit (14), die ein Prozessorsystem und Clientsoftware beinhaltet, die konfiguriert ist, um im Speicher (19) gelagerte Kombinationen von Identitätsinformationen mit den empfangenen Kombinationen von drahtlosen Netzwerken zu vergleichen, und die das bevorzugte Netzwerk aus den gespeicherten Kombinationen auswählt, welche die empfangene Kombination von drahtlosen Netzwerken beinhaltet, und um eine Verbindung mit dem gewählten Netzwerk aufzubauen.

2. Das drahtlose Kommunikationsgerät gemäß Anspruch 1, eine Benutzerführung umfassend, die bedienbar ist, um manuell eines aus einer Anzahl von gleichzeitig wählbaren detektierten Netzwerken zu wählen, wobei die Steuereinheit (14) konfiguriert ist, um Identitätsinformationen für die Anzahl von gleichzeitig detektierten Netzwerken als eine Kombination zu speichern und das gewählte Netzwerk als das bevorzugte Netzwerk aus dieser Kombination im Speicher (19) zu lagern.

3. Das drahtlose Kommunikationsgerät gemäß Anspruch 1, wobei die Steuereinheit (14) konfiguriert ist, um eine Verbindung zum gewählten Netzwerk, das auf einen Setupbefehl reagiert, aufzubauen.

4. Das drahtlose Kommunikationsgerät gemäß Anspruch 1, wobei das bevorzugte Netzwerk das zuletzt vom Anwender für eine Verbindung gewählte Netzwerk unter den Netzwerken, die in dieser Kombination enthalten sind, ist.

5. Das drahtlose Kommunikationsgerät gemäß Anspruch 1, wobei zumindest eines der drahtlosen Netzwerke ein WLAN ist.

6. Das drahtlose Kommunikationsgerät gemäß Anspruch 1, wobei zumindest eines der drahtlosen Netzwerke ein WiMAX-Netzwerk ist.

7. Das drahtlose Kommunikationsgerät gemäß Anspruch 1, wobei zumindest eines der drahtlosen Netzwerke ein mobiles Netzwerk ist.

8. Das drahtlose Kommunikationsgerät gemäß Anspruch 1, wobei das drahtlose Netzwerk eine beliebige Kombination von drahtlosen Netzwerken ist, die verschiedene Technologien wie WLAN, WIMAX, mobiles Netzwerk und ähnliche anwenden.

9. Das drahtlose Kommunikationsgerät gemäß Anspruch 1, wobei die Steuereinheit (14) konfiguriert ist, um das bevorzugte Netzwerk aus einer der gespeicherten Kombinationen zu wählen, die sich aus einer Anzahl gleichzeitig zugriffbarer Netzwerke zusammensetzt.

10. Das drahtlose Kommunikationsgerät gemäß Anspruch 1, umfassend eine Bedienerführung, die einen Bildschirm und eine Dateneingabeschnittstelle beinhaltet, wobei die Steuereinheit konfiguriert ist,
um Signalempfang von einer Anzahl von Netzwerken zu detektieren, die eine im Speicher gelagerte Kombination bilden,
um eine Verbindungsalternative auf dem Bildschirm anzuzeigen, wobei die Bedienerführung konfiguriert ist, um eine Verbindung zum bevorzugten Netzwerk aufzubauen, welches auf die benutzeraktivierte Verbindungsalternative reagiert.

11. Das drahtlose Kommunikationsgerät gemäß Anspruch 1, welches Teil eines mobilen Telefons bildet.

12. Das drahtlose Kommunikationsgerät gemäß Anspruch 1, welches Teil eines tragbaren Computers bildet.

13. Computerprogrammprodukt zur Anwendung in einem Prozessorsystem eines drahtlosen Kommunikationsgeräts (10), **gekennzeichnet durch** einen Computerprogrammcode, welcher ausführbar ist, um:
Netzwerkidentitätsinformationen in Kommunikationssignalen von einer Anzahl von gleichzeitig zugriffbaren Netzwerken zu empfangen, wobei die Kommunikationssignale eine empfangene Kombination von drahtlosen Netzwerken bilden,
auf einen Speicher (19) zuzugreifen, der Identitätsinformationen für Kombinationen von drahtlosen Netzwerken lagert und, für mindestens eine der Kombinationen, Informationen über das bevorzugte Netzwerk für die Kombination lagert,
Identitätsinformationen für die im Speicher (19) gelagerte Kombination mit der empfangenen Identitätsinformation für die Kombination zu vergleichen,
das bevorzugte Netzwerk aus einer gespeicherten Kombination zu wählen, welche die empfangene Kombination aus gleichzeitig zugriffbaren Netzwerken beinhaltet, und
eine Verbindung zwischen dem Kommunikationsgerät und dem gewählten Netzwerk aufzubauen.

14. Das Computerprogramm gemäß Anspruch 13, welches Computerprogrammcode umfasst, das ausführbar ist, um:
Informationen für eine Anzahl von gleichzeitig detektierten Netzwerken als eine Kombination zu speichern,
eine Anwenderwahl eines der detektierten Netzwerke zur Verbindung zu ermitteln, und um das gewählte Netzwerk als das bevorzugte Netzwerk für diese Kombination im Speicher zu lagern.

15. Das Computerprogramm gemäß Anspruch 13, welches Computerprogrammcode beinhaltet, das ausführbar ist, um eine Verbindung zum gewählten Netzwerk aufzubauen, welches auf einen Verbindungsaufbaubefehl antwortet.

16. Das Computerprogramm gemäß Anspruch 13, wobei das bevorzugte Netzwerk das durch den Benutzer zuletzt zur Verbindung gewählte Netzwerk unter den Netzwerken, die in dieser Kombination beinhaltet sind, ist.

17. Das Computerprogramm gemäß Anspruch 13, wobei zumindest eines der drahtlosen Netzwerke ein WLAN ist.

18. Das Computerprogramm gemäß Anspruch 13, wobei zumindest eines der drahtlosen Netzwerke ein WiMAX-Netzwerk ist.

19. Das Computerprogramm gemäß Anspruch 13, wobei zumindest eines der drahtlosen Netzwerke ein mobiles Netzwerk ist.

20. Das Computerprogramm gemäß Anspruch 13, wobei das drahtlose Netzwerk eine Kombination von drahtlosen Netzwerken ist, die verschiedene Techniken wie WLAN, WiMAX, mobiles Netzwerk und ähnliche anwenden.

21. Das Computerprogramm gemäß Anspruch 13, wobei der Computerprogrammcode ausführbar ist, um das bevorzugte Netzwerk aus einer gespeicherten Kombination zu wählen, die aus einer Anzahl gleichzeitig zugriffbarer Netzwerke besteht.

22. Das Computerprogramm gemäß Anspruch 13, welches Computerprogrammcode umfasst, das ausführbar ist, um:
Signalempfang von einer Anzahl von Netzwerken zu detektieren, die eine im Speicher gelagerte Kombination bilden,
eine Verbindungsalternative auf einem Bildschirm zu präsentieren, und
eine Verbindung zum bevorzugten Netzwerk aufzubauen, welches auf eine Benutzeraktivierung der Verbindungsalternative antwortet.

## Revendications

1. Dispositif de réseau de communications sans fil (10),
**caractérisé en ce que** :
- une mémoire (19) pour stockage de l'information d'identité pour des combinaisons des réseaux sans fil et, pour au moins une de ces combinaisons, de l'information d'un réseau préféré de cette combinaison ;
- une unité d'émetteur-récepteur (15) configurée pour réception des signaux de communication de réseau comprenant de l'information d'identité de réseau constituant une combinaison reçu des réseaux sans fil simultanément accessibles ; et
- une unité de control (14), comprenant un système de processeur et un software de client, configurée à comparaître des combinaisons de l'information de l'identité stocké dans la mémoire (19) avec la combinaison de réseaux sans fil reçu, et de sélectionner le réseau préféré dans une combinaison stocké comprenant la combinaison reçu des réseaux sans fil, et d'établir une connexion au réseau sélectionné.

2. Dispositif de réseau de communications sans fil selon la revendication 1, comprenant une interface d'utilisateur opérable à sélectionner manuellement un d'un nombre de réseaux simultanément détectés, dans lequel l'unité de control (14) est configurée à stocker de l'information d'identité pour le nombre de réseaux simultanément détectés comme combinaison, et le réseau sélectionné comme le réseau préféré de cette combinaison, dans la mémoire (19).

3. Dispositif de réseau de communications sans fil selon la revendication 1, dans lequel l'unité de control (14) est configurée à établir une connexion au réseau sélectionné, réceptif à une commande d'établissement de connexion.

4. Dispositif de réseau de communications sans fil selon la revendication 1, dans lequel le réseau préféré est le réseau sélectionné dernièrement d'un utilisateur pour connexion, dans les réseaux comprises dans cette combinaison.

5. Dispositif de réseau de communications sans fil selon la revendication 1, dans lequel au moins un des réseaux sans fil est un WLAN.

6. Dispositif de réseau de communications sans fil selon la revendication 1, dans lequel au moins un des réseaux sans fil est un réseau WiMAX.

7. Dispositif de réseau de communications sans fil selon la revendication 1, dans lequel au moins un des réseaux est un réseau cellulaire.

8. Dispositif de réseau de communications sans fil selon la revendication 1, dans lequel les réseaux sans fil sont une combinaison quelconque des réseaux sans fils employant des techniques différentes comme WLAN, WiMAX, cellulaire et pareils.

9. Dispositif de réseau de communications sans fil selon la revendication 1, dans lequel l'unité de control (14) est configurée à sélectionner le réseau préféré d'une combinaison stockée se composant du nombre de réseaux simultanément accessibles.

10. Dispositif de réseau de communications sans fil selon la revendication 1, comprenant une interface d'utilisateur incluant un écran et une interface de données d'entrée, dans lequel l'unité de control est configuré à détecter un signale de réception d'un nombre de réseaux constituant une combinaison stockée dans la mémoire,
présenter un choix de connexion sur l'écran, dans lequel l'interface d'utilisateur est configurée à établir un connexion à un réseau préféré réceptif à une activation d'utilisateur du choix de connexion.

11. Dispositif de réseau de communications sans fil selon la revendication 1, constituant une partie d'un téléphone mobile.

12. Dispositif de réseau de communications sans fil selon la revendication 1, constituant une partie d'un ordinateur portatif.

13. Produit de programme d'ordinateur pour utilisation dans un système de processor d'un dispositif de communications sans fil (10), **caractérisé en ce qu'**un code programme d'ordinateur exécutable à : détecter de l'information d'identité de réseau dans des signaux de communication reçu d'un nombre de réseaux simultanément accessibles constituant une combinaison reçu de réseaux sans fil,
accéder une mémoire (19) stockant de l'information d'identité des combinaisons de réseaux sans fil et, pour au moins une de ces combinaisons, de l'information d'un réseau préféré dans cette combinaison comparer de l'information de combinaison d'identité stocké dans la mémoire (19) avec **l'information combinaison d'identité** reçu, sélectionner le réseau préféré d'une combinaison stockée comprenant la combinaison reçu de réseaux simultanément accessibles, et établir un connexion entre les dispositifs de communication et le réseau sélectionné.

14. Programme d'ordinateur selon la revendication 13, comprenant du code **de programme d'ordinateur** exécutable à : stocker de l'information d'identité pour un nombre de réseaux simultanément détectés comme une combinaison,
sentir sélectionnement d'utilisateur d'un des réseaux détectés pour connexion, et stocker le réseau sélectionné comme le réseau préféré de cette combinaison dans la mémoire.

15. Programme d'ordinateur selon la revendication 13, comprenant code du programme d'ordinateur exécutable à, établir une connexion au réseau sélectionné réceptif à une commande d'établissement de connexion.

16. Programme d'ordinateur selon la revendication 13, dans lequel le réseau préféré est le réseau sélectionné dernièrement d'un utilisateur pour connexion, dans les réseaux compris dans cette combinaison.

17. Programme d'ordinateur selon la revendication 13, dans lequel au moins un des réseaux sans fil est un WLAN.

18. Programme d'ordinateur selon la revendication 13, dans lequel au moins un des réseaux sans fil est un réseau WiMAX.

19. Programme d'ordinateur selon la revendication 13, dans lequel au moins un des réseaux est un réseau cellulaire.

20. Programme d'ordinateur selon la revendication 13, dans lequel le réseau sans fil est une combinaison quelconque de réseaux sans fil employant des techniques différentes comme WLAN, WiMAX, cellulaire et pareils.

21. Programme d'ordinateur selon la revendication 13, dans lequel le code **programme d'ordinateur** exécutable à: sélectionner le réseaux préféré d'une combinaison stockée se composant du nombre de réseaux simultanément accessibles.

22. Programme d'ordinateur selon la revendication 13, dans lequel le code programme d'ordinateur exécutable à: détecter réception signal d'un nombre de réseaux constituant une combinaison stocké dans la mémoire,
présenter un choix de connexion sur un écran, et
établir un connexion au réseau préféré réceptif a un activation d'utilisateur du choix de connexion.
